# EUROPÄISCHE PATENTSCHRIFT

(11) **EP 1 900 987 B1**
(45) Veröffentlichungstag und Bekanntmachung des Hinweises auf die Patenterteilung: **06.07.2011**
(21) Anmeldenummer: 07108860.3
(22) Anmeldetag: 24.05.2007
(51) Int. Cl.: F16K 31/56, F16K 3/02, F16K 27/04

(54) **Absperrarmatur mit Oberteilspülung**
Shut-off valve with upper part flushing
Armature de verrouillage dotée d'un rinçage de la partie supérieure

(30) Priorität: 15.09.2006 DE 102006043455
(43) Veröffentlichungstag der Anmeldung: 19.03.2008
(73) Patentinhaber: Hawle Armaturen GmbH, 83395 Freilassing (DE)
(72) Erfinder: Schmid, Erich, 83416 Saaldorf-Surheim (DE)
(74) Vertreter: Schwabe - Sandmair - Marx

(56) Entgegenhaltungen:
- DE-A1- 10 146 247
- DE-B- 1 236 884
- US-A- 3 559 948
- US-A- 3 636 971
- US-A- 4 153 069

## Beschreibung

Die Erfindung betrifft eine Absperrarmatur für Fluidleitungen, insbesondere Flüssigkeits- oder Gasleitungen. Solche Absperrarmaturen werden in Versorgungs- oder Entsorgungsrohre eingesetzt, um diese bei Bedarf absperren zu können, und sie weisen meist ein Gehäuse mit einem Armaturenoberteil und einem Armaturenunterteil auf, wobei das Armaturenoberteil im Wesentlichen eine Spindel unterbringt und das Armaturenunterteil im Wesentlichen den Strömungskanal bildet, in welchen eine abgedichtete Absperrscheibe von der Spindel angetrieben ein- und ausgefahren werden kann. Herkömmlicherweise fährt die Absperrscheibe zwischen zwei im Gehäuse gelagerten Ringdichtungen in den Strömungskanal ein, um so einen dichten Abschluss des Strömungskanals zu bewirken. Ein so gearteter Absperrschieber ist aus der DE 100 50 240 B4 bekannt.

Der Nachteil solcher Systeme gemäß dem Stand der Technik liegt darin, dass trotz der beidseitigen Abdichtung für die Absperrscheibe manchmal doch etwas von dem Leitungsfluid in das Innere des Armaturenoberteils eindringt (bei Flüssigkeits- oder Wasserleitungen) oder dass sich im Armaturenoberteil durch Kondensation Wassermengen bilden können. Solche Wassermengen bilden Totwasserbereiche, in denen sich sehr leicht mikrobiologische Keime bilden und vermehren können.

Es ist die Aufgabe der vorliegenden Erfindung, eine Absperrarmatur derart auszugestalten, dass die Bildung von Totwasserbereichen, insbesondere im Armaturenoberteil, vermieden wird.

Diese Aufgabe wird erfindungsgemäß durch eine Absperrarmatur gemäß dem Patentanspruch 1 gelöst. Die Unteransprüche definieren bevorzugte Ausführungsformen der Erfindung.

Aus der US 3,559,948 ist ein Sperrventil bekannt für eine Verbindung zwischen einem Tank und einer Pipeline. Der tankseitige Stutzen des Ventils weist an seinem dem Sperrschieber zugewandten Ende Bohrungen auf, damit Flüssigkeit aus dem Tank in das Ventilgehäuse eindringen kann. Zweck dieser Konstruktion ist es ein Ventil zu bauen, bei dem sich beim Auftreten einer Undichtigkeit auf der Pipelineseite des Ventils kein großer Druck in dem Ventilkörper aufbauen kann. Dadurch kann das Ventil leicht gebaut werden. Die US 4,153,069 beschreibt ein Sperrventil, bei dem in Fließrichtung vor dem Sperrschieber zwei Hindernisse in den Rohrstutzen des Ventils so eingebaut sind, dass sie in das fließende Medium hineinragen. Eines der Hindernisse ist mit Bohrungen versehen, die Flüssigkeit aus dem Rohrstutzen über eine Verbindungsleitung in das Ventilgehäuse einleiten, das andere Hindernis ermöglich den Rückfluss der Flüssigkeit aus dem Ventilgehäuse zurück in den Ventilstutzen.

Eine Absperrarmatur gemäß der vorliegenden Erfindung ist so ausgestaltet, dass die Strömungskanal-Aufnahme für die Absperrscheibe auf der Anströmseite Zu- und Abflusskanäle aufweist, welche den Strömungskanal anströmseitig mit dem Inneren des Armaturenoberteils verbinden. Mit anderen Worten wird gemäß der vorliegenden Erfindung nicht versucht, das Armaturenoberteil durch weitere oder verbesserte Dichtungsmaßnahmen vor eindringendem Wasser zu schützen, sondern es wird vielmehr gerade der umgekehrte Weg gewählt. Die Zu- und Abflusskanäle ermöglichen zwar ein Eindringen des Fluids, das im Strömungskanal geleitet wird, sie ermöglichen aber andererseits auch eine Spülung bzw. einen Austausch der Flüssigkeiten, die in den Oberteilbereich gelangen. Damit wird verhindert, dass dieselbe Flüssigkeit über längere Zeit im Inneren des Armaturenoberteils als Totwasser stehen bleibt, Keime bildet und das durchströmende Medium verunreinigt. Zusätzliche Maßnahmen, wie beispielsweise das Chlorieren von Leitungswasser sind nicht mehr notwendig, und damit zeigt die vorliegende Erfindung insbesondere im Bereich der Trinkwasserversorgung ihre vorteilhafte Wirkung.

Bei einer Ausführungsform der vorliegenden Erfindung öffnen die Zu- und Abflusskanäle als Spülkanäle einen wesentlichen Teil der Querschnittsfläche zwischen dem Strömungskanal und dem Armaturenoberteil. Insbesondere öffnen sie einen Teil, der derart bemessen ist, dass er die ungehinderte Einströmung des Fluids in den Armaturenoberteil und die ungehinderte Ausströmung des Fluids aus dem Armaturenoberteil, insbesondere durch Schwerkrafteinfluss gestattet. Die Teilöffnung dieser Querschnittsfläche durch die Spülkanäle kann zwischen 10% und 90%, insbesondere zwischen 30% und 80%, zwischen 50% und 80% oder zwischen 70% und 80% liegen. Der tatsächliche Öffnungsanteil oder Spülquerschnitt wird dabei von der Art der transportierten Fluide und den absoluten Abmessungen der Armatur oder ihrer Teile abhängen.

Bei eine vorteilhaften Ausgestaltung der erfindungsgemäßen Absperrarmatur ist die Absperrscheibe einseitig auf ihrer strömungsabgewandten Seite abgedichtet. Vorteilhafterweise ergibt sich eine solche einseitige Abdichtungsmöglichkeit aus dem erfindungsgemäßen Verzicht auf eine anströmungsseitige Abdichtung des Armaturenoberteils.

Die Strömungskanal-Aufnahme für die Absperrscheibe umfasst ein Absperrpaket, das zwei Einsätze aufweist, welche die Absperrscheibe umgreifen, wobei der anströmungsseitige Einsatz die Zu- und Abflusskanäle aufweist. Wenn die vorher genannte einseitige Abdichtung auf der strömungsabgewandten Seite verwirklicht wird, ist es dabei möglich, die einseitig wirkende Dichtung am abströmungsseitigen Einsatz des Absperrpakets anzuordnen.

Ferner besteht die Möglichkeit, in dem Fall, wo ein Absperrpaket verwendet wird, in den anströmungsseitigen Einsatz keine Dichtung zum Armaturenoberteil und/oder zum Armaturenunterteil hin einzubringen, insbesondere keine direkte Abdichtung, während eine weitere Variante darin besteht, in den abströmseitigen Einsatz eine Dichtung zum Armaturenoberteil und/oder zum Armaturenunterteil hin einzubringen, insbesondere eine direkte Abdichtung.

Die Erfindung betrifft also in einer speziellen Ausführungsform ein einseitiges Dichtsystem, bestehend aus zwei Komponenten, die als Absperrpaket-Einsätze dienen und einer Dichtung, welche zwischen den beiden Einsätzen platziert ist. Die Dichtung ist in einem der Einsätze vollflächig eingesetzt und, bei einer bevorzugten Ausführungsform in dem anderen Einsatz nur zum Teil, nämlich als Auflagedichtung im unteren Abschnitt. In dem Einsatz, in welchem die Dichtung nur teilweise gehalten wird, sind bei einer Ausführungsform Schlitze zu finden, die sich von der Durchgangsöffnung im Armaturenunterteil bis hin in den Bereich des Oberteils erstrecken. Durch diese Spülöffnung wird das Oberteil der Absperrarmatur gespült. Der Vorgang des Spülens findet nicht nur im offenen Zustand des Schiebers statt sondern auch im geschlossenen Zustand, wenn der Druck von der Anströmseite, also von der Seite des Einsatzes mit den Spülöffnungen her kommt. Steht der Druck von der anderen Seite am Absperrelement bzw. an der Absperrscheibe an, kann das restliche Wasser, das sich noch im Oberteil befindet, über den Einsatz mit den Spülöffnungen abfließen.

Die Erfindung wird im Weiteren anhand einer Ausführungsform näher erläutert. Sie kann alle hierin beschriebenen Merkmale einzeln sowie in jedweder sinnvollen Kombination umfassen. In den beiliegenden Zeichnungen zeigen:
- Figur 1: eine perspektivische Schnittansicht einer erfindungsgemäßen Absperrarmatur;
- Figur 2: einen perspektivischen Blick von oben auf die Absperrarmatur ohne Armaturenoberteil; und
- Figur 3: eine untere Schnittansicht des Armaturenunterteils mit Absperrpaket.

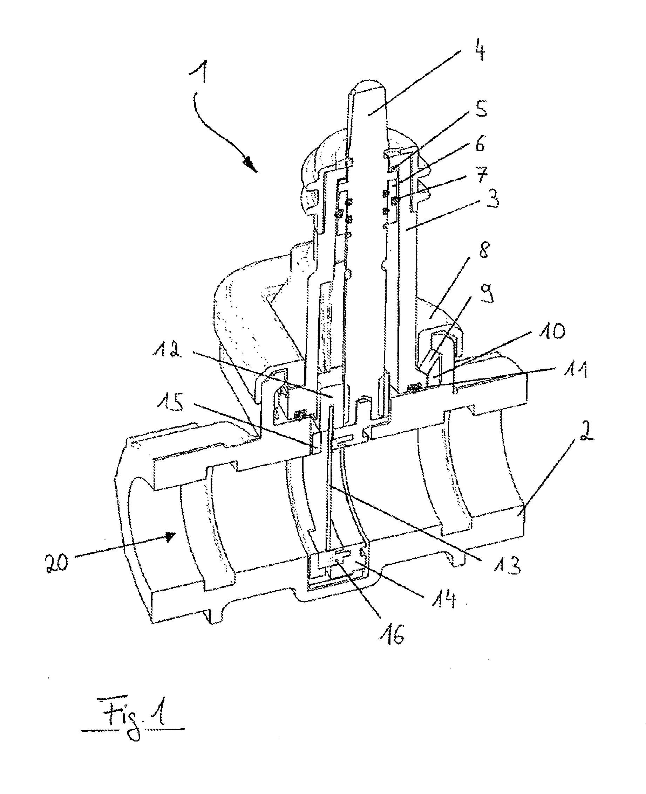

Eine Ausführungsform einer erfindungsgemäßen Absperrarmatur ist in Figur 1 in perspektivischer Darstellung und im Halbschnitt gezeigt. Die Absperrarmatur trägt insgesamt das Bezugszeichen 1. Sie weist ein Armaturenoberteil 3 sowie ein Armaturenunterteil 2 auf. Im Armaturenoberteil 3 ist unter anderem über eine Gleitscheibe 5, eine Dichtbuchse 6 und O-Ring-Dichtungen 7 eine Spindel 4 gelagert, die eine Spindelmutter 12 trägt, mittels welcher die Absperrscheibe 13 nach oben und unten verfahren werden kann. Der in Figur 1 dargestellte Zustand zeigt die Absperrstellung der Armatur 1. Das Oberteil 3 ist mit dem Unterteil 2 über Verbindungs- und Sicherungselemente 9, 10 verbunden, über denen sich ein Kantenschutz 8 erstreckt. Die Dichtung zwischen Oberteil und Unterteil ist mit dem Bezugszeichen 11 angedeutet.

Die Abdichtung des Strömungskanals 20 im Armaturenunterteil 2 erfolgt durch die Absperrscheibe 13 und ein Abdichtpaket, welches einen anströmungsseitigen Einsatz 15, einen abströmungsseitigen Einsatz 14 und eine Absperrdichtung 16 umfasst. Die Absperrdichtung 16 dichtet im Wesentlichen nur einseitig zwischen der abströmseitigen Fläche der Absperrscheibe 13 und dem abströmseitigen Einsatz 14 ab, und zwar im Wesentlichen ringförmig im oberen Bereich und als Auflagedichtung im unteren Bereich, wo die Scheibe 13 auf dem sich etwas nach vorne (zur Strömung hin) erstreckenden Dichtungs-Unterteil aufliegt.

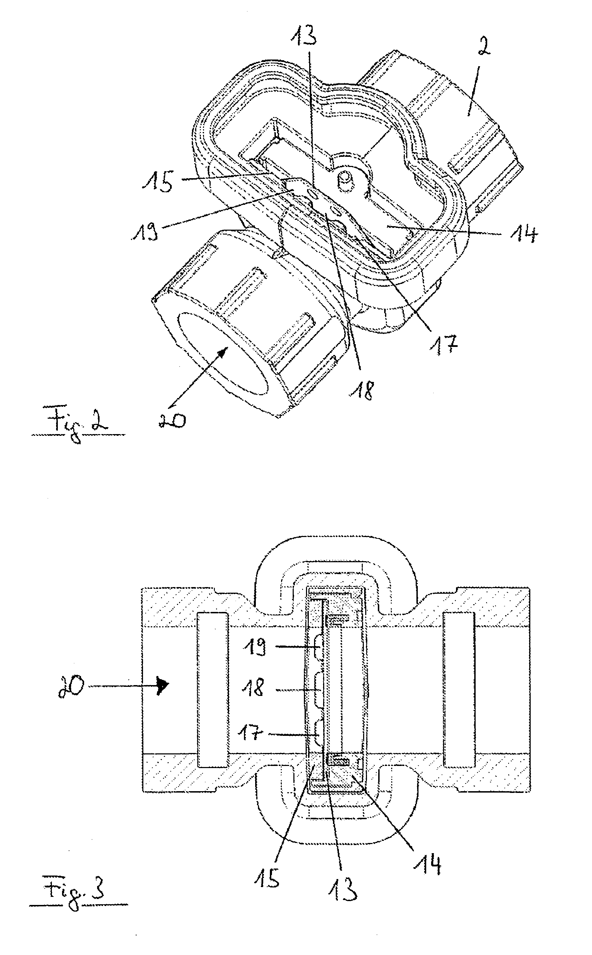

In der Figur 2 ist nun bei abgenommener Spindel und abgenommenem Armaturenoberteil ein Blick von oben auf das Absperrpaket 14, 15 und die darin einfahrende Absperrscheibe 13 möglich. Der anströmseitige Einsatz 15 des Absperrpakets liegt nicht durchgehend an der Absperrscheibe 13 an, sondern er weist Ausnehmungen, nämlich Zu- und Abflusskanäle 17, 18 und 19 auf, die von unten auch in der Figur 3 nochmals zu sehen sind. Durch diese Spülkanäle kann strömendes Fluid (zum Beispiel Trinkwasser) das in Pfeilrichtung im Strömungskanal 20 fließt, aus dem Strömungskanal hinauf in das Innere des Armaturenoberteils gelangen, um dieses durchzuspülen und natürlich kann angesammeltes Wasser im Inneren des Armaturenoberteils (im Spindelgehäuse) auch durch die Kanäle 17, 18, 19 wieder abfließen, so dass Totwassergebiete vermieden werden.

## Patentansprüche

1. Absperrarmatur (1) für Fluidleitungen, mit
a) einer Spindel (4),
b) einem Armaturenoberteil (3), das die Spindel (4) unterbringt,
c) einem Armaturenunterteil (2), das im Wesentlichen einen Strömungskanal (20) bildet,
d) einer abgedichteten Absperrscheibe (13), und
e) einer Strömungskanal-Aufnahme (14, 15) für die Absperrscheibe (13),
f) wobei die Absperrscheibe (13) mittels der Spindel (4) in den Strömungskanal (20) in die Strömungskanal-Aufnahme (14, 15) ein- und ausfahrbar ist,
g) wobei die Strömungskanal-Aufnahme (14, 15) auf einer Anströmseite Zu- und Abflusskanäle (17, 18, 19) aufweist, die den Strömungskanal (20) auf der Anströmseite mit einem Inneren des Armaturoberteils (3) verbinden,
**dadurch gekennzeichnet, dass**
die Strömungskanal-Aufnahme (14, 15) für die Absperrscheibe (13) ein Absperrpaket umfasst, das zwei Einsätze aufweist, welche die Absperrscheibe (13) umgreifen, wobei der anströmungsseitige Einsatz (15) nicht durchgehend an der Absperrscheibe (13) anliegt, sondern Ausnehmungen aufweist, die die Zu- und Abflusskanäle (17, 18, 19) bilden.

2. Absperrarmatur nach Anspruch 1, **dadurch gekennzeichnet, dass** die Zu- und Abflusskanäle (17, 18, 19) als Spülkanäle einen wesentlichen Teil der Querschnittsfläche zwischen dem Strömungskanal (20) und dem Armaturenoberteil (3) öffnen.

3. Absperrarmatur nach Anspruch 2, **dadurch gekennzeichnet, dass** die Zu- und Abflusskanäle (17, 18, 19) als Spülkanäle einen Teil der Querschnittsfläche zwischen dem Strömungskanal (20) und dem Armaturenoberteil (3) öffnen, der die ungehinderte Einströmung des Fluids in den Armaturenoberteil (3) und die ungehinderte Ausströmung des Fluids aus dem Armaturenoberteil (3), insbesondere durch Schwerkrafteinfluss, gestattet.

4. Absperrarmatur nach Anspruch 2 oder 3, **dadurch gekennzeichnet, dass** die Zu- und Abflusskanäle (17, 18, 19) als Spülkanäle einen Teil der Querschnittsfläche zwischen dem Strömungskanal (20) und dem Armaturenoberteil (3) öffnen, der zwischen 10% und 90%, insbesondere zwischen 30 % und 80%, zwischen 50% und 80 % oder zwischen 70% und 80% liegt.

5. Absperrarmatur nach einem der Ansprüche 1 bis 4, **dadurch gekennzeichnet, dass** die Absperrscheibe (13) einseitig auf ihrer strömungsabgewandten Seite abgedichtet ist.

6. Absperrarmatur nach Anspruch 5, **dadurch gekennzeichnet, dass** am abströmungsseitigen Einsatz (14) des Absperrpakets die einseitig wirkende Dichtung (16) angeordnet ist.

7. Absperrarmatur nach Anspruch 1 oder 6, **dadurch gekennzeichnet, dass** der anströmungsseitige Einsatz (15) keine Dichtung zum Armaturenoberteil (3) und/oder zum Armaturenunterteil (2) hin aufweist, insbesondere keine direkte Abdichtung.

8. Absperrarmatur nach einem der Ansprüche 1, 6 und 7, **dadurch gekennzeichnet, dass** der abströmungsseitige Einsatz (14) eine Dichtung zum Armaturenoberteil (3) und/oder zum Armaturenunterteil (2) hin aufweist, insbesondere eine direkte Abdichtung.

## Claims

1. A shut-off brace (1) for fluid conduits, comprising:
a) a spindle (4);
b) an upper part (3) of the brace, which accommodates the spindle (4);
c) a lower part (2) of the brace, which substantially forms a flow channel (20);
d) a sealed shut-off disc (13); and
e) a flow channel receptacle (14, 15) for the shut-off disc (13),
f) wherein the shut-off disc (13) can be inserted into the flow channel receptacle (14, 15) in the flow channel (20) and removed by means of the spindle (4),
g) wherein the upstream side of the flow channel receptacle (14, 15) comprises intake and drainage channels (17, 18, 19) which connect the upstream side of the flow channel (20) to the interior of the upper part (3) of the brace,
**characterised in that**
the flow channel receptacle (14, 15) for the shut-off disc (13) comprises a shut-off package which comprises two inserts which encompass the shut-off disc (13), wherein the upstream-side insert (15) does not continuously abut the shut-off disc (13) but rather comprises cavities which form the intake and drainage channels (17, 18, 19).

2. The shut-off brace according to claim 1, **characterised in that** the intake and drainage channels (17, 18, 19), as flushing channels, open a substantial portion of the cross-sectional area between the flow channel (20) and the upper part (3) of the brace.

3. The shut-off brace according to claim 2, **characterised in that** the intake and drainage channels (17, 18, 19), as flushing channels, open a portion of the cross-sectional area between the flow channel (20) and the upper part (3) of the brace which allows the fluid to flow unhindered into the upper part (3) of the brace and allows the fluid to flow unhindered out of the upper part (3) of the brace, in particular by the effect of gravity.

4. The shut-off brace according to claim 2 or 3, **characterised in that** the intake and drainage channels (17, 18, 19), as flushing channels, open a portion of the cross-sectional area between the flow channel (20) and the upper part (3) of the brace which is between 10% and 90%, in particular between 30% and 80%, between 50% and 80% or between 70% and 80%.

5. The shut-off brace according to any one of claims 1 to 4, **characterised in that** the shut-off disc (13) is sealed on one side, on its side facing away from the flow.

6. The shut-off brace according to claim 5, **characterised in that** the seal (16) which acts on one side is arranged on the downstream-side insert (14) of the shut-off package.

7. The shut-off brace according to claim 1 or 6, **characterised in that** the upstream-side insert (15) does not comprise a seal, in particular a direct seal, towards the upper part (3) and/or lower part (2) of the brace.

8. The shut-off brace according to any one of claims 1, 6 and 7, **characterised in that** the downstream-side insert (14) comprises a seal, in particular a direct seal, towards the upper part (3) and/or lower part (2) of the brace.

## Revendications

1. Vanne d'arrêt (1) pour des conduites de fluide, comportant :
a) une tige (4),
b) une partie supérieure de vanne (3) qui reçoit la tige (4),
c) une partie inférieure de vanne (2) qui forme sensiblement un canal d'écoulement (20),
d) un disque d'obturation étanché (13), et
e) un récepteur de canal d'écoulement (14, 15) pour le disque d'obturation (13),
f) dans laquelle le disque d'obturation (13) peut être rentré et sorti dans le canal d'écoulement (20) dans le récepteur de canal d'écoulement (14, 15) au moyen de la tige (4),
g) dans laquelle le récepteur de canal d'écoulement (14, 15) comporte des canaux d'alimentation et d'évacuation (17, 18, 19) sur un côté d'entrée d'écoulement, lesquels canaux relient le canal d'écoulement (20) du côté d'entrée d'écoulement à un espace intérieur de la partie supérieure d'armature (3),
**caractérisée en ce que**
le récepteur de canal d'écoulement (14, 15) pour le disque d'obturation (13) inclut un bloc d'obturation comportant deux pièces d'insertion qui entourent le disque d'obturation (13), la pièce d'insertion côté entrée d'écoulement (15) ne venant pas en butée contre le disque d'obturation (13) de manière continue, mais comportant des évidements qui forment les canaux d'alimentation et d'évacuation (17, 18, 19).

2. Vanne d'arrêt selon la revendication 1, **caractérisée en ce que** les canaux d'alimentation et d'évacuation (17, 18, 19) faisant office de canaux de rinçage ouvrent une partie substantielle de l'aire de section transversale entre le canal d'écoulement (20) et la partie supérieure de vanne (3).

3. Vanne d'arrêt selon la revendication 2, **caractérisée en ce que** les canaux d'alimentation et d'évacuation (17, 18, 19) faisant office de canaux de rinçage ouvrent une partie de l'aire de section transversale entre le canal d'écoulement (20) et la partie supérieure de vanne (3), en permettant ainsi l'entrée libre par écoulement du fluide dans la partie supérieure d'armature (3) et la sortie libre par écoulement du fluide à partir de la partie supérieure de vanne (3), en particulier sous l'effet de la force de pesanteur.

4. Vanne d'arrêt selon la revendication 2 ou 3, **caractérisée en ce que** les canaux d'alimentation et d'évacuation (17, 18, 19) faisant office de canaux de rinçage ouvrent une partie de l'aire de section transversale entre le canal d'écoulement (20) et la partie supérieure de vanne (3) qui est comprise entre 10 % et 90 %, en particulier entre 30 % et 80 %, entre 50 % et 80 % ou entre 70 % et 80 %.

5. Vanne d'arrêt selon l'une quelconque des revendications 1 à 4, **caractérisée en ce que** le disque d'obturation (13) est étanché d'un seul côté, sur son côté opposé à l'écoulement.

6. Vanne d'arrêt selon la revendication 5, **caractérisée en ce que** sur la pièce d'insertion côté sortie d'écoulement (14) du bloc d'obturation est agencé le joint (16) agissant d'un seul côté.

7. Vanne d'arrêt selon la revendication 1 ou 6, **caractérisée en ce que** la pièce d'insertion côté entrée d'écoulement (15) ne comporte aucun joint pour la partie supérieure de vanne (3) et/ou pour la partie inférieure de vanne (2), en particulier aucune étanchéité directe.

8. Vanne d'arrêt selon l'une quelconque des revendications 1, 6 et 7, **caractérisée en ce que** la pièce d'insertion côté sortie d'écoulement (14) comporte un joint pour la partie supérieure de vanne (3) et/ou pour la partie inférieure de vanne (2), en particulier une étanchéité directe.
